# EUROPÄISCHE PATENTSCHRIFT

(11) **EP 1 825 487 B1**
(45) Veröffentlichungstag und Bekanntmachung des Hinweises auf die Patenterteilung: **13.11.2013**
(21) Anmeldenummer: 05816250.4
(22) Anmeldetag: 23.11.2005
(51) Int. Cl.: H01F 41/06, H02K 15/04

(54) **WICKELVORRICHTUNG FÜR EINE FELDSPULE UND FERTIGUNGSVORRICHTUNG**
WINDING DEVICE FOR A FIELD COIL AND PROCESSING EQUIPMENT
DISPOSITIF DE BOBINAGE POUR UNE BOBINE DE CHAMP ET DISPOSITIF DE FABRICATION

(30) Priorität: 08.12.2004 DE 102004059087
(43) Veröffentlichungstag der Anmeldung: 29.08.2007
(73) Patentinhaber: ROBERT BOSCH GMBH, 70442 Stuttgart (DE)
(72) Erfinder: KREUZER, Helmut, 71701 Schwieberdingen (DE); RAU, Eberhard, 70825 Korntal-Muenchingen (DE); WOLF, Dirk, 71272 Renningen (DE); PUHAHN, Alexander, 73765 Neuhausen (DE); SIMON, Olaf, 75417 Muehlacker (DE); GOEBEL, Yvonne, 74232 Abstatt (DE); WALLE, Bernhard, 71282 Hemmingen (DE); HARRER, Thomas, 71287 Weissach-Flach (DE)
(86) Internationale Anmeldenummer: PCT/EP2005/056163
(87) Internationale Veröffentlichungsnummer: WO 2006/061323

(56) Entgegenhaltungen:
- DE-A1- 10 208 566
- US-A- 3 810 587
- US-A- 5 197 180
- US-A- 5 619 085
- US-A1- 2004 216 302

## Beschreibung

### Stand der Technik

Die Erfindung geht aus von einer Wickelvorrichtung für eine Feldspule und einer Fertigungsvorrichtung nach den Oberbegriffen der Ansprüche 1 und 13.

Bei der Fertigung von Drehstrommaschinen wie Motoren oder Generatoren entsteht das Problem, die drei Phasenspulen der Stator-Wicklung einzeln und nacheinander dachziegelartig überlappend in die Nuten des Stator-Eisenpakets einlegen zu müssen, um eine gleichförmige Spulenlage und damit den höchsten Wirkungsgrad zu erzielen. Die bekannte Methode, für jeweils einen Pol eine Phasenlage zu wickeln, anschließend deren Leiterdraht unterbrechungsfrei abzulegen, mit dem zweiten Leitungsdraht eine Drahtüberkreuzung zu erzeugen und dessen Phasenspule zu wickeln, um dann den ganzen Vorgang nochmals für die dritte Phasenspule zu wiederholen, macht eine Serienfertigung unwirtschaftlich. Steckwicklungen, bei denen einzelne Leiterschleifen nach dem Einfügen in Nuten verbunden werden, kommen für höhere Leiterzahlen und/oder Polzahlen ebenfalls nicht in Frage, da zu viele Verbindungsstellen für elektrische Kontaktierungen auftreten. Wicklungstechniken, die das getrennte Wickeln und nachträgliche Zusammenfügen der als Wicklungspakete ausgebildeten Einzelphasen vorsehen, haben durch die Ungleichförmigkeit der Wicklung und die kaum vermeidbaren Leiterkreuzungen Nachteile, die sich auf die Leistung, den Wirkungsgrad und die Lebensdauer der Maschine auswirken.

Aus der US 5 197 180 A ist darüber hinaus ein Verfahren zur Herstellung einer Feldspule bekannt, bei welchem ein isolierter Leiter kontinuierlich zu einer Wicklung mit einer ersten Gruppe von Wicklungen, die in eine erste Richtung gewickelt sind, und einer Gruppe von zweiten Wicklungen, die in eine entgegengesetzte Richtung gewickelt sind, gewickelt wird. Weiterhin sind aus der US 3 810 587 A ein Verfahren sowie eine Vorrichtung zum Wickeln einer Spule bekannt, wobei ein im Querschnitt polygonal geformter Wickeldorn genutzt wird.

### Vorteile der Erfindung

Die Erfindung geht aus von einer Wickelvorrichtung zur Herstellung einer Feldspule für eine elektrische Maschine, insbesondere einer Feldspule mit einer Zweischichtschleifenwicklung, wobei die Feldspule aus einer Mehrzahl von elektrisch seriell und/oder parallel geschalteten Wicklungspaketen gebildet ist.

Es wird vorgeschlagen, dass ein Wickeldorn vorgesehen ist, auf dem wenigstens zwei axial voneinander beabstandete Wicklungspakete simultan erzeugbar sind.

Die Erfindung erlaubt die simultane Erzeugung, insbesondere quasikontinuierlich, einer dreiphasigen Feldspule im Endlosverfahren und ist daher für eine wirtschaftliche Serienfertigung einsetzbar. Es sind beliebige Polzahlen und Leiterzahlen möglich, und die Leiterverteilung in einzelnen Wicklungspaketen kann sowohl symmetrisch als auch asymmetrisch sein. Dadurch ist es möglich, ein großes Spektrum verschiedener Feldspulen zu erzeugen, z.B. für ein ganzes Programm von Motoren oder Generatoren.

Erfindungsgemäß weist der Wickeldorn radial ausschwenkbare Lamellen auf, wobei je ein Wicklungspaket in eine Nut zwischen zwei Lamellen einbringbar ist. Mit ausgeschwenkten Lamellen ist das aktuell zu wickelnde Wicklungspaket axial auf dem Wickeldorn festgelegt. Werden die Lamellen wieder eingeschwenkt, können die Wicklungspakete axial entlang der Längsachse des Wickeldorns verschoben werden.

In einer günstigen Ausgestaltung ist eine Drahtzuführeinheit so vorgesehen, dass dem Wickeldorn zugeführte Drähte um wenigstens zwei Achsen schwenkbar sind. Vorzugsweise ist die Drahtzuführeinheit senkrecht zur Längsachse des Wickeldorns verschiebbar. Die Drahtzuführung kann daher so abgewinkelt, verschoben und verschränkt werden, dass nacheinander Wicklungspakete oder Gruppen von Wicklungspaketen mit unterschiedlichem Drehsinn gewickelt werden können. Zunächst kann ein Wicklungspaket oder eine Gruppe von Wicklungspaketen mit einem ersten Drehsinn, dann anschließend Wicklungspaket oder eine Gruppe von Wicklungspaketen mit entgegengesetztem Drehsinn gewickelt werden. Die Wicklungspakete mit unterschiedlichem Drehsinn ergeben jeweils einen Nordpol und einen Südpol bei bestromter Feldspule.

In einer günstigen Ausgestaltung ist die Drahtzuführeinheit senkrecht zu einer Längsachse des Wickeldorns bewegbar. Drahtzuführeinheit und Wickeldorn sind dabei in einer starren axialen Zuordnung angeordnet. Zweckmäßigerweise werden fertig gewickelte Wicklungspakete aus diesem Bereich verschoben, um Platz für neue Wicklungspakete zu schaffen, während Drahtzuführeinheit und Wickeldorn in ihrer Position verharren. Der Aufbau und der Betrieb der Wickelvorrichtung werden vereinfacht, es sind weniger mechanisch bewegte Teile notwendig.

In einer günstigen Ausgestaltung ist eine Fixiereinrichtung zur Fixierung der Drähte mit dem Wickeldorn mitlaufend angeordnet. Wird begonnen, ein neues Wicklungspaket zu wickeln, kann der jeweilige Draht auf dem Wickeldorn zuverlässig gehalten werden, bis der Draht auf dem Drahtanfang zu liegen kommt und diesen gegen Durchrutschen selbst sichern kann. So ist ein zuverlässiges und sicheres Aufwickeln des Drahts möglich.

In einer günstigen Ausgestaltung zum Wickeln von weiteren Wicklungspaketen sind die gewickelten Wicklungspakete axial verschiebbar. Die Wicklungspakete können gruppenweise simultan gewickelt und aus dem Wicklungsbereich entfernt werden, um Platz für die nächste Gruppe von Wicklungspaketen zu schaffen. Auf diese Weise können beliebig viele Wicklungspakete oder Gruppen von Wicklungspaketen quasikontinuierlich hergestellt werden. Günstigerweise ist eine Vorschubeinrichtung zum Greifen und axialen Verschieben der Wicklungspakete vorgesehen. Vorteilhaft ist, dass die Wicklungspakete in ihrer Zuordnung zueinander und in ihrem Raster verbleiben, in dem sie hergestellt wurden. Die Wicklungspakete können in genau vorgegebenen Abständen und Abmessungen erzeugt werden, wie sie später in der Feldspule notwendig sind.

In einer günstigen Ausgestaltung ist zur Fixierung der Drähte bei axialer Verschiebung der Wicklungspakete eine radial zum Wickeldorn beabstandete Leiteinrichtung vorgesehen. Zweckmäßigerweise ist dabei eine Fangeinrichtung zur Sicherung der zu den Wicklungspaketen führenden Drähte bei deren axialer Verschiebung vorgesehen, vorzugsweise in Form von senkrecht zu den Drähten orientierten Stäben. Damit können die Drähte in genau definierter Weise auf einer Seite des Wickeldorns festgehalten und/oder umgelenkt werden und die Drahtzuführeinrichtung von einer Seite des Wickeldorns auf dessen andere Seite verschoben werden, um einen definierten Wickelanfang für ein Wicklungspaket oder eine Gruppe von Wicklungspaketen mit einer gegensinnigen Wicklungsrichtung zu ermöglichen. Besonders günstig ist, dass die Leiteinrichtung so mit der Drahtzuführung in Wirkverbindung bringbar ist, dass eine Vertauschung der Drähte möglich ist, wobei insbesondere bei parallel geführten Drähten wenigstens zwei äußere Drähte vertauschbar sind und ein innerer Draht seine Position beibehält. Damit kann automatisiert ein Phasenwechsel der Drähte erreicht werden, indem durch die zweiachsig bewegliche Drahtzuführung ein Wechsel der Auszugebene um 180° erfolgt. Dadurch kann eine phasenrichtige Lage der Wicklungspakete erreicht werden, da die Dreiphasenspulen mit abwechselnd linkem und rechtem Wicklungssinn erzeugt werden. Eine dabei erzeugten Schleifen der Drähte von einer Gruppe von Wicklungspaketen zur nächsten kann von einer Biegevorrichtung in eine Nut zwischen den Lamellen eingelegt werden, so dass die Schleifen beim Wickeln der nächsten Gruppe von Wicklungspaketen überwickelt werden können. Eine solche Schleifenbiegevorrichtung ist zweckmäßigerweise auf jeder Seite des Wickeldorns vorgesehen. Die quasi endlose Schleifenbildung mit Phasenwechsel ermöglicht eine automatisierte Fertigung einer beliebigen Anzahl von Gruppen mit simultan erzeugten Wicklungspaketen.

In einer günstigen Ausgestaltung sind die Leiteinrichtung und die Vorschubeinrichtung auf einem gemeinsamen Vorschubschlitten angeordnet. Mit dem gemeinsamen Vorschubschlitten ist gewährleistet, dass ein Abwinkeln und Verschränken der Wicklungsdrähte in genau definierten Maßen in Bezug auf den Wickeldorn und die axiale Verschiebung erfolgen kann.

In einer günstigen Ausgestaltung weist der Wickeldorn eine Länge auf, die einer kompletten Feldspule sowie, für jeweils einen Pol einer voreilenden und einer nacheilenden Einzelwindung entspricht. Die Einzelwindung kann in gestrecktem Zustand aus der Feldspule herausgeführt und als Zuleitung genutzt werden. Zwischen den beiden Einzelwindungen können die Wicklungspakete einer ersten Feldspule von Wicklungspaketen der nächsten Feldspule getrennt werden. Die Feldspule umfasst bevorzugt drei in einzelne Wicklungspakete aufgeteilte Phasenspulen mit jeweils zwei Polen und kann für eine Drehstrommaschine eingesetzt werden.

Bei einer erfindungsgemäßen Fertigungsvorrichtung mit einer erfindungsgemäßen Wickelvorrichtung ist ein Schränkwerkzeug vorgesehen, in das die Wicklungspakete in der auf dem Wickeldorn vorgegebenen Reihenfolge einlegbar sind. Die Abstände der Wicklungspakete zueinander sowie deren räumliche Anordnung bleiben erhalten. Die Wicklungspakete können in definierter Weise so geneigt werden, dass sie dachziegelartig übereinander angeordnet sind. In dieser Ausgestaltung kann die Feldspule beispielsweise in korrespondierende Nuten eines flachen Blechpakets gefügt werden, das dann zu einem hohlzylinderförmigen Stator rundgebogen wird.

Das Wickeln und das Schränken der Feldspule sind serienfähig und ermöglichen eine Produktion von großen Stückzahlen gleichartiger Feldspulen ohne übermäßigen manuellen Eingriff.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von Zeichnungen dargestellten Ausführungsbeispielen der Erfindung.

Im Folgenden zeigen:
Fig.1 eine Ansicht einer bevorzugten Wickelvorrichtung in explosionsähnlicher Darstellung;
Fig. 2 eine Feldspule vor und nach dem Schränken von Wicklungspaketen;
Fig. 3 Wicklungspakete einer Feldspule mit einer Verschiebeeinrichtung; und
Fig. 4a-e; einen Verlauf von Wicklungsdrähten beim Wickeln eines Nordpols (a) und beim Übergang zu einer Wicklung eines Südpols mit geschränktem Anlegen (b), beim Abwinkeln und Schränken um 180°(c), beim Abwinkeln und Schränken um 45° (d) und zu Beginn des Wickelns des Südpols (e).

### Beschreibung des Ausführungsbeispiels

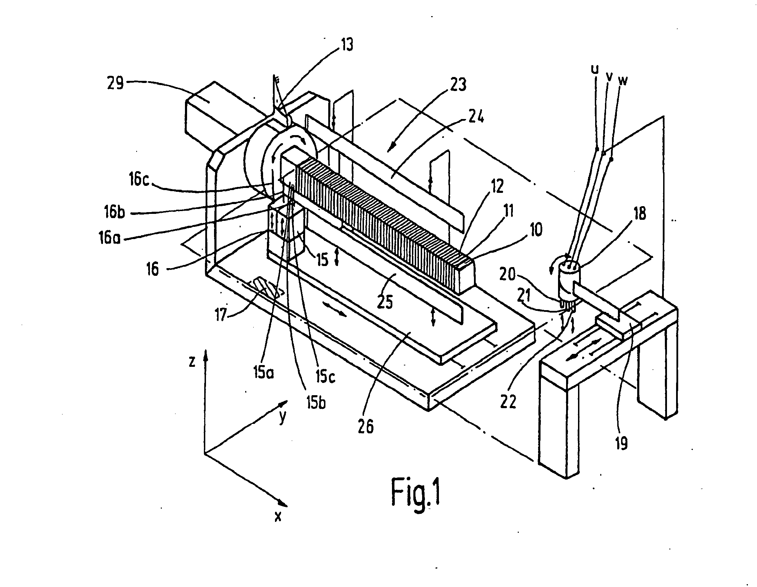

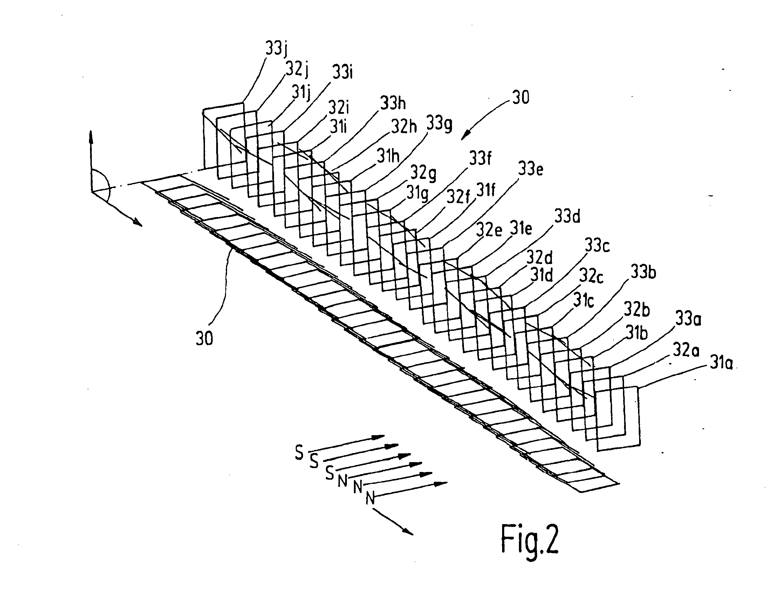

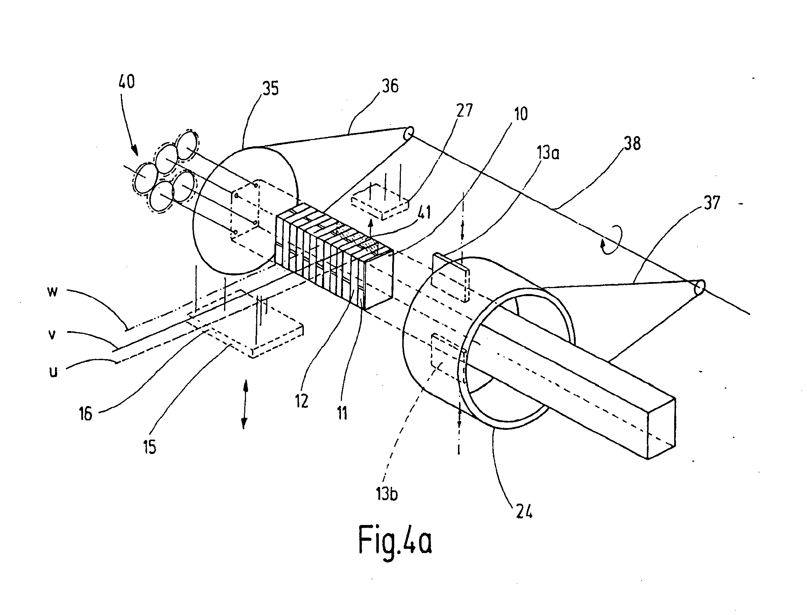

In Figur 1 ist in eine explosionsähnliche Darstellung einer bevorzugten Wickelvorrichtung zur Herstellung einer Feldspule 30 für eine elektrische Maschine dargestellt. Figur 2 zeigt die Feldspule 30 mit angedeuteten Wicklungspaketen 31a, 32a, 33a bis 31j, 32j, 33j, die simultan herstellbar sind, wobei jeweils die Wicklungspakete 31a...31j eine erste Phasenspule 31, die Wicklungspakete 32a...32j eine zweite Phasenspule 32 und die Wicklungspakete 33a...33j eine dritte Phasenspule 33 ergeben. Die Figuren 4a-4e erläutern Details der im Folgenden beschriebenen Drahtführung.

Ein Wickeldorn 10 mit einer Längsachse x weist einen rechteckigen Querschnitt auf, der die Dimensionen der zu erzeugenden Wicklungspakete der Feldspule 30 bestimmt. Auf dem Wickeldorn 10 sind wenigstens zwei axial voneinander beabstandete Wicklungspakete 31a, 32a, 33a simultan erzeugbar. Der Wickeldorn 10 ist an seinen Kanten mit ausschwenkbaren fächerförmigen Lamellen 11 versehen, die von innen über nicht dargestellte Wellen betätigbar sind. Die Lamellen 11 wandeln die ansonsten ,glatte Oberfläche des Wickeldorns 10 durch ihre trennende Form in ein Ringnutenpaket mit Nuten 12 zwischen Lamellen 11 um. In der Figur sind der Einfachheit wegen nur einzelne dieser Elemente beispielhaft mit Bezugszeichen bezeichnet. In die so gebildeten Nuten 12 werden simultan Drähte u, v, w der Phasenspulendrähte gewickelt und so in jeder Nut 12 eine erste Gruppe von drei Wicklungspaketen 31a, 32a, 33a gebildet.

Dieser Vorgang erfolgt zur Wicklung z.B. eines Nordpols N im Uhrzeigersinn, ein Südpol S wird dann in der entgegengesetzten Richtung gewickelt. Dazu ist der Wickeldorn 10 einseitig über einen geeigneten, nicht näher ausgeführten Servoantrieb 29 um seine Längsachse x drehbar. Der Servoantrieb 29 ermöglicht es, eine beliebige Windungszahl in der Gruppe von simultan gewickelten Wicklungspaketen 31a, 32a, 33a vorzusehen. Außerdem kann durch eine unterschiedliche Windungszahl bei einer Drehung in die eine und in die andere Richtung eine asymmetrische Leiteranzahl erzeugt werden.

Die Drähte u, v, w werden durch eine als Dreifachdrahtdüse ausgebildete Drahtzuführeinheit 18 über Düsen 20, 21, 22 dem Wickeldorn 10 zugeführt. Ein schraffierter Bereich 17 zeigt die tatsächliche Position der Drahtzuführeinheit 18, die in der Figur der Erkennbarkeit wegen entfernt vom Wickeldorn 10 und ihrer tatsächlichen Position gezeichnet ist. Die Drahtzuführeinheit 18 und der Wickeldorn 10 sind in einer starren axialen Zuordnung angeordnet. Die Drahtzuführeinheit 18 befindet sich in ihrer tatsächlichen Position über dem Wickeldorn in der Nähe einer zwei Dreifachdrahtklemmen umfassende Klemmvorrichtung 13.

Zur Wicklung im Uhrzeigersinn wird die Drahtzuführeinheit 18 mit einem Schlitten 19 senkrecht zur Längsachse x des Wickeldorns 10 in eine in der Figur z.B. links vom Wickeldorn 10 liegende Position gefahren, für die entgegen gesetzte Richtung auf die rechte Seite. Dadurch wird beim Wechseln des Wicklungssinns sichergestellt, dass die zugeführten Drähte u, v, w unter Zugspannung stehen. Nach dem Wickeln der drei Wicklungspakete 31a, 32a, 33a z.B. im Uhrzeigersinn folgt das Wickeln von drei Wicklungspaketen 31b, 32b, 33b im Gegenuhrzeigersinn.

Auf dem Wickeldorn 10 ist die Klemmvorrichtung 13 mitlaufend montiert, die zwei um 180° versetzte Dreifachdrahtklemmen (nur eine ist erkennbar) aufweist. Zu Beginn einer dreifach parallelen Wicklung von drei Wicklungspaketen 31a, 32a, 33a hält die erste Dreifachdrahtklemme 27 die Drähte u, v, w bis zu einem Drehwinkel von 180° fest und übergibt dann an die zweite, nicht erkennbare Dreifachdrahtklemme und wobei sich die erste Dreifachdrahtklemme von den Drähten u, v, w löst. Mit anliegender zweiter Dreifachdrahtklemme wird die erste Windung vollendet. Danach löst sich auch die zweite Dreifachdrahtklemme von den Drähten u, v, w und die gewünschte Anzahl von weiteren Windungen kann mit Hilfe der Haftreibung der ersten Windung aufgewickelt werden.

Wenn drei simultane Wicklungspakete 31a, 32a, 33a, d.h. eine dreiphasige Polspule, vollendet sind, wird die Drehung des Wickeldorns 10 angehalten und je nach aktueller Positionierung der Drahtzuführeinheit 18 links oder rechts vom Wickeldorn 10 zunächst eine als Führungsblock ausgebildete Leiteinrichtung 15 aus einer abgesenkten Position hochgefahren (Figur 4a). Eine gleichartige Leiteinrichtung 15 ist auf beiden Seiten des Wickeldorns 10 angeordnet. Dadurch werden hinter den drei Drähten u, v, w stufenförmig abgesetzte, als Leitstifte ausgebildete Fangeinrichtungen bzw. Formblöcke 15a, 15b, 15c positioniert.

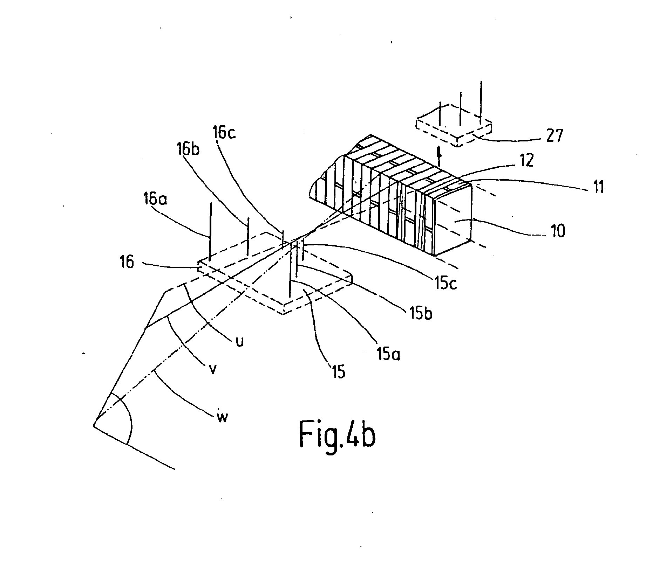

Die Drahtzuführeinheit 18 ist drehbar und schwenkt die Ebene der drei nebeneinander liegenden Drähte u, v, w um -45° um die z-Achse. Die Düsen 20, 21, 22 werden gleichzeitig um -45° um die y-Achse geschwenkt. Die Drähte u, v, w spannen jetzt eine Ebene auf, die auf der Raumdiagonalen liegt (Figur 4b). Die Fangeinrichtungen 15a, 15b, 15c sind korrespondierend dazu angeordnet. Jede der Fangeinrichtungen 15a, 15b, 15c fängt dadurch den ihr zugeordneten Draht u, v oder w.

Auf den Wickeldorn 10 wird jetzt eine Vorschubeinrichtung 23 angefahren, die z.B. einen oberen Vorschubkamm 24 und einen dazu um 180° versetzten unteren Vorschubkamm 25 aufweist. Die Vorschubkämme 24, 25 gewährleisten die Orientierung der bereits gewickelten Wicklungspakete 31a, 32a, 33a. Wenn die Vorschubkämme 24, 25 die Spulenorientierung übernommen haben, werden die Lamellen 11 in den Wickeldorn 10 zurückgeschwenkt. Der Wickeldorn 10 erhält dadurch eine glatte Oberfläche. Jetzt kann ein Vorschubschlitten 26 verfahren werden, auf dem sowohl die erste Leiteinrichtung 15 als auch eine zweite Leiteinrichtung 16 mit Fangeinrichtungen 16a-c, zu der es ebenso eine korrespondierende, nicht erkennbare Leiteinrichtung auf der anderen Seite des Wickeldorns 10 gibt, angeordnet sind. Der Wickeldorn 10 und die Drahtzuführeinheit 18 behalten währenddessen ihre Position bei.

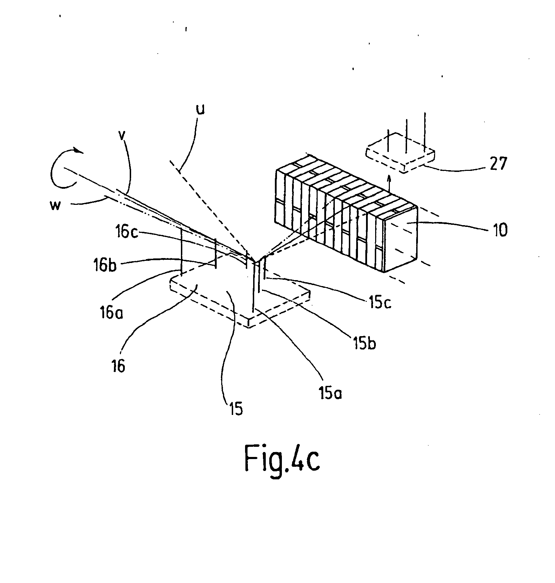

Der Vorschub entspricht der Breite von drei Wicklungspaketen 31a, 32a, 33a. d.h. drei Polspulen mit ihren entsprechenden durch die Lamellen 11 verursachten Zwischenräumen. Die Drähte u, v, w werden dabei von der Leiteinrichtung 15 in die x-Richtung umgelenkt (Figur 4c).

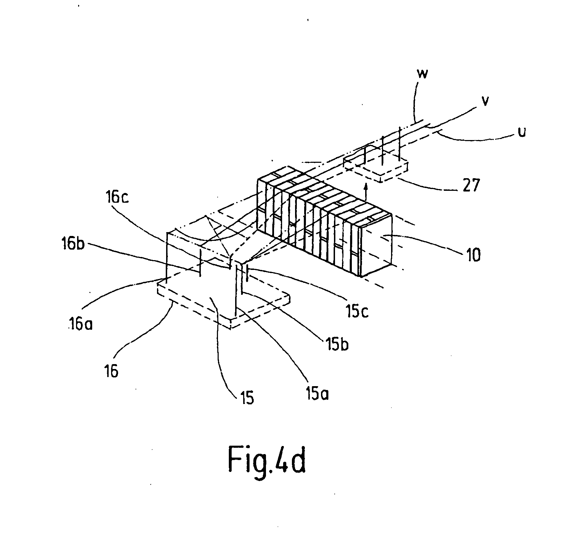

Nach der Vorschubbewegung werden die Lamellen 11 wieder aus dem Wickeldorn 10 ausgeschwenkt und die Vorschubeinrichtung 23 wieder abgefahren. Die Feldspule 30 ist jetzt um einen Polspulendrilling bestehend aus drei Wicklungspaketen 31a, 32a, 33a auf dem Wickeldorn 10 nach rechts in x-Richtung gerückt. Synchron mit der Vorschubbewegung erfolgt die Bewegung der ebenfalls auf dem Vorschubschlitten 26 gelagerten Leiteinrichtungen 15, 16. Während der Vorschubbewegung wechselt die Drahtzuführeinheit 18 ihr Ausrichtung um die z-Achse von -45° auf +45° und um die y-Achse ebenfalls von -45° auf +45°. Damit erfolgt zusammen mit der Vorschubbewegung in x-Richtung ein Wechsel der Drähte u, v, w, d.h. der bei der Nordpolspulenwicklung in x-Richtung vorne liegende Draht u behält bei der Südpolspulenwicklung diese Position, indem der Draht v der mittleren Phase seine Lage behält und die beiden äußeren Drähte u, w ihre Lage gegeneinander über Kreuz tauschen (Figur 4c). Am Ende der Vorschubbewegung wird die zweite Leiteinrichtung 16, nachdem die Drähte u, v, w in Zug- und Vorschubrichtung dessen Position passiert haben, hochgefahren und dann die Drähte u, v, w durch das Verfahren des Schlittens 19 nach links wieder aus der x-Richtung in die y-Richtung abgelenkt (Figur 4d).

Während der Schlitten 19 sich mit der Drahtzuführeinheit 18 über den Wickeldorn 10 bewegt, werden die Drahtzuführeinheit 18 und die Düsen 20, 21, 22 wieder in der jeweiligen Achse um je +45° auf ihre Neutralstellung zurückgeschwenkt. Die so über den Wickeldorn 10 in den von den ausgeschwenkten Lamellen 11 gebildeten Nuten 12 flach verlaufenden Drähte u, v, w werden wieder mit der oben liegenden Dreifachdrahtklemme der Fixiereinrichtung 13 fixiert. Anschließend werden beide Leiteinrichtungen 15, 16 wieder abgesenkt

Zusammengefasst wird zunächst also nach dem Wicklungsabschluss einer Gruppe von Wicklungspaketen 31a, 32a, 33a die Leiteinrichtung 15 hochgefahren, dann die drei Drähte u, v, w um 45° in der y-Achse verschwenkt daran vorbeigezogen und jetzt simultan zum Vorschub der bereits gewickelten Wicklungspakete 31a, 32a, 33a die drei Drähte u, v, w in x-Richtung aus der Drahtzuführeinheit 18 gezogen werden. Dabei findet ein Phasenwechsel der Auszugebene der Drähte u, v, w um 180° statt, was durch die zweiachsig bewegliche Drahtzuführeinheit 18, bewirkt wird. Der mittlere Draht v behält seine Position, während die Drähte u und v die Plätze tauschen. Nach der Vorschub- bzw. Phasenwechselbewegung fährt die Leiteinrichtung 16 hoch und der gleiche Vorgang wie bei Leiteinrichtung 15 erfolgt in umgekehrter Reihenfolge. Nur auf diese Weise lässt sich eine phasenrichtige Lage der Wicklungspakete 31a, 32a, 33a erzeugen, denn die Dreiphasenspulen werden abwechselnd in linker und rechter Wicklungsrichtung erzeugt.

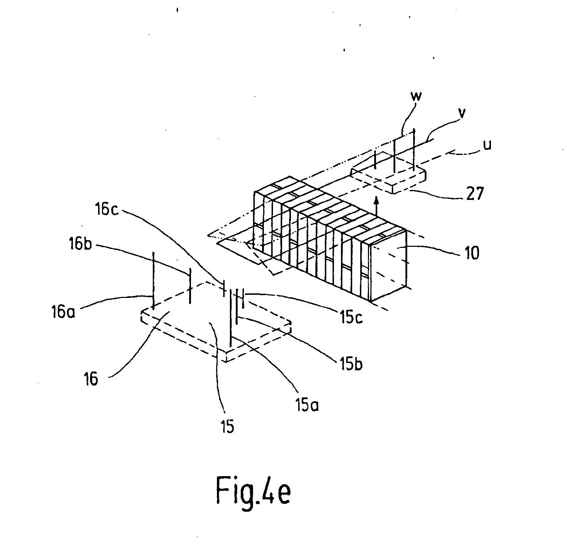

Mit einem nicht dargestellten Biegewerkzeug werden in der gleichen Bewegungsachse die drei U-förmigen Schleifen vom ersten zum zweiten Spulendrilling 31a, 32a, 33a, 31b, 32b, 33b einschließlich der Leiterwechsel in der y-Richtung an den Wickeldorn 10 angelegt. Die Form dieser Schleifen bzw. der ausgeschwenkten Lamellen 11 bzw. des Biegewerkzeugs erlauben diesen Vorgang. Die so erreichte Position entspricht, abgesehen von der Drahtzuführungsseite und dem jetzt erforderlichen entgegengesetzten Wicklungssinn genau der Situation zum Wicklungsbeginn der ersten drei Wicklungspakete 31a, 32a, 33a (Figur 4e). Die Spulenwicklung mit der Klemmungsübernahme und allen anderen Details bleiben, abgesehen von den entgegengesetzten Düsenschwenkrichtungen und Neigungsrichtungen, ebenfalls gleich. Die nächsten Wicklungspakete 31b, 32b, 33b werden über die angelegten Schleifen gewickelt.

Falls asymmetrische Leiterzahlen erzeugt werden sollen, ist lediglich die Windungszahl vorwärts/rückwärts unterschiedlich einzustellen.

Während des eigentlichen Wickelvorgangs wird der Vorschubschlitten 26 wieder in seine Ausgangslage zurückgefahren. Auf diese Weise wird quasikontinuierlich eine endlose Feldspule 30 erzeugt.

Da Feldspulen 30 mit einer definierten Polzahl erzeugt werden sollen, ohne nach jeder fertigen Feldspule 30 die Drähte u, v, w neu einziehen zu müssen, wird vor dem ersten Wicklungspaket bzw. der ersten Gruppe von Wicklungspaketen 31a, 32a, 33a je eine dreifache Einzelwindung aufgewickelt, so dass zwischen zwei kompletten Feldspulen 30 zwei hintereinander liegende Einleiterwicklungen liegen. Der Wickeldorn 10 ist so ausgeführt, dass eine komplette Feldspule 30 und drei Einfachwindungen in den durch die Lamellen 11 gebildeten bzw. von den Vorschubkämmen 24, 25 bereitgestellten Nuten 12 Platz finden. Das bedeutet, dass für eine z.B. sechzehnpolige Dreiphasen-Feldspule 30 und die drei genannten Einfachwindungen eine Anzahl von N = 57 Nuten (N = 16x3+3x3) vorzusehen sind.

Wenn eine Feldspule 30 mit den voreilenden und nacheilenden Einfachwindungen fertiggestellt ist, die Drahtschleifen zur folgenden Einfachwindung erzeugt und die Drähte u, v, w auf dem Wickeldorn 10 mit der Fixiereinrichtung 13 erneut fixiert worden sind, wird eine nicht dargestellte Transfereinrichtung in Form eines Transferkammpaares, z.B. entsprechend den Vorschubkammpaar 24, 25, aber parallel zur xy-Ebene liegend, angefahren. Jetzt können mit einer nicht dargestellten Schneideinrichtung die Drahtbrücken zwischen den Einfachwindungen durchtrennt werden. Die Lamellen 11 werden eingeschwenkt, und die separierte Feldspule 30 kann vom Wickeldorn 10 in x-Richtung abgezogen werden. Danach werden die Lamellen 11 wieder ausgeschwenkt, und der Wickelvorgang kann fortgesetzt werden.

Die separierte Feldspule 30 wird in ein Schränkwerkzeug eingesetzt, wie in Figur 2 angedeutet ist, in dem die oben und unten liegenden Spulenleiter in nicht dargestellten Nuten geführt werden. Diese Nuten werden mit nicht dargestellten Schwenkriegeln verschlossen, um die Beibehaltung der Leiterordnung zu garantieren. Dann werden die Transferkämme abgefahren.

Die beiden voreilenden und nacheilenden Einfachwindungen werden mit einer Ausziehvorrichtung vom Spulenkern nach außen abgezogen und bilden die späteren Anschlussleitungen. Die sechzehnpolige dreiphasige Feldspule 30 wird nun windschief verschränkt, wodurch die 48 Einzelspulen dachziegelartig aufeinander zu liegen kommen (unterer Teil der Figur 2). Dadurch bildet sich eine Zweischichtschleifenwicklung, die z.B. in Nuten eines flachen Blechpakets gefügt werden kann. Das Blechpaket kann dann als Hohlzylinder rundgebogen werden und einen Stator einer bevorzugten elektrischen Drehstrommaschine bilden.

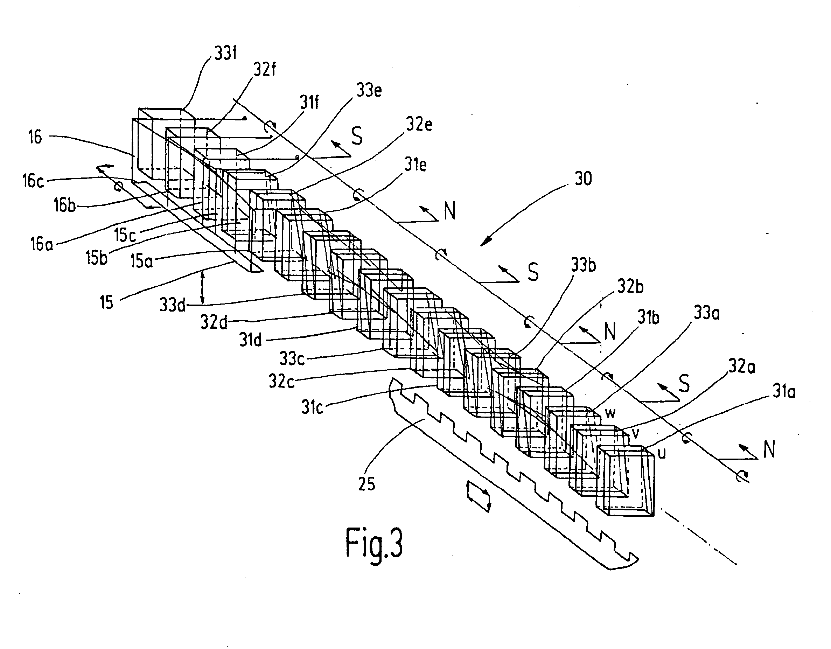

Figur 3 illustriert die abwechselnd mit gegensinnigem Wicklungssinn gewickelten Wicklungspakete 31a, 32a, 33a ... 31e, 32e, 33e einer Feldspule 30 an. Dadurch bilden sich abwechselnd Nordpole N und Südpole S in der Feldspule 30 aus. Weiterhin ist ein Ausschnitt eines Vorschubkamms 25 gezeichnet, der zum Verschieben der Wicklungspakete 31a, 32a, 33a ... 31e, 32e, 33e vorgesehen ist. Dessen den Wicklungspaketen 31a, 32a, 33a ... 31e, 32e, 33e zugewandte Zähne korrespondieren mit den Lücken zwischen den Wicklungspaketen31a, 32a, 33a ... 31e, 32e, 33e. Im hinteren Bereich der Figur ist zuerkennen, wie die Drähte u, v, w zu Beginn eines Wickelvorgangs von Wicklungspaketen 31f, 32f, 33f bereit liegen. Kleine Richtungspfeile geben jeweils den Drehsinn an, mit dem die jeweilige Gruppe vom Wicklungspaketen 31a, 32a, 33a...31e, 32e,33e gewickelt worden ist.

Die Figuren 4a bis 4e erläutern die Drahtführung beim Verschieben der Feldspule 30 und des Schlittens 19 der Drahtzuführeinheit 18, wie bereits im Zusammenhang mit dem bei Figur 1 beschriebenen Ablauf ausgeführt wurde. In den Figuren 4b bis 4e sind nur die Drahtführungsdetails herausgestellt. In Figur 4a illustriert zusätzlich einen Antrieb 40 für das Ausschwenken und Einschwenken der Lamellen 11, die über nicht näher bezeichnete Zahnräder und Wellen an jeder Kante des Wickeldorns 11 angetrieben werden. Drehfest mit dem Wickeldorn ist eine Abtriebsrad 35, das über ein Triebmittel 36, z.B. eine Kette oder ein Riemen, eine Achse 38 antreibt. Mit 27 ist ein Element einer der Leiteinrichtungen jenseits des Wickeldorns 10 bezeichnet, das analog zu den Leiteinrichtungen 15, 16 arbeitet. Diese wiederum ist über ein Triebmittel 37 antriebsverbunden mit einem Hohlzylinder 24, der Dreifachklemmen 13a und 13b synchron zum Wickeldorn 10 dreht. Ein schraffierter Bereich 41 im Bereich der Lamellen 11 und Nuten 12 (es sind nur einzelne der Vielzahl von gleichartigen Elementen bezeichnet) deutet die tatsächliche Position der Dreifachdrahtklemmen 13a, 13b an. Die Dreifachdrahtklemmen 13a, 13b sind um 180° versetzt am inneren Umfang des Hohlzylinder 24 angeordnet und ragen axial soweit über diesen hinaus, dass der Hohlzylinder 24 nicht mit der Drahtführung kollidiert.

## Patentansprüche

1. Wickelvorrichtung zur Herstellung einer Feldspule (30) für eine elektrische Maschine, insbesondere einer Feldspule (30) mit einer Zweischichtschleifenwicklung, wobei die Feldspule aus einer Mehrzahl von elektrisch seriell und/oder parallel geschalteten Wicklungspaketen (31a, 32a, 33a ...31j, 32j, 33j) gebildet ist, wobei ein Wickeldorn (10) vorgesehen ist, auf dem wenigstens zwei axial voneinander beabstandete Wicklungspakete (31a, 32a, 33a) simultan erzeugbar sind, **dadurch gekennzeichnet, dass** der Wickeldorn (10) radial ausschwenkbare Lamellen (11) aufweist, wobei je ein Wicklungspaket (31a, 32a, 33a) in eine Nut (12) zwischen zwei Lamellen (11) einbringbar ist.

2. Wickelvorrichtung nach Anspruch 1, **dadurch gekennzeichnet, dass** eine Drahtzuführeinheit (18) so vorgesehen ist, dass dem Wickeldorn (10) zugeführte Drähte (u, v, w) um wenigstens zwei Achsen (y, z) schwenkbar sind.

3. Wickelvorrichtung nach Anspruch 2, **dadurch gekennzeichnet, dass** die Drahtzuführeinheit (18) senkrecht zu einer Längsachse (x) des Wickeldorns (10) verschiebbar ist.

4. Wickelvorrichtung nach Anspruch 3, **dadurch gekennzeichnet, dass** die Drahtzuführeinheit (18) und der Wickeldorn (10) in einer starren axialen Zuordnung angeordnet sind.

5. Wickelvorrichtung nach einem der vorhergehenden Ansprüche, **dadurch gekennzeichnet, dass** eine Fixiereinrichtung (13) zur Fixierung der Drähte (u, v, w) auf dem Wickeldorn (10) mitlaufend mit dem Wickeldorn (10) angeordnet ist.

6. Wickelvorrichtung nach einem der vorhergehenden Ansprüche, **dadurch gekennzeichnet, dass** zum Wickeln von weiteren Wicklungspaketen (31b, 32b, 33b) die gewickelten Wicklungspakete (31a, 32a, 33a) axial verschiebbar sind.

7. Wickelvorrichtung nach Anspruch Ansprueche 1 bis 6, **dadurch gekennzeichnet, dass** eine Vorschubeinrichtung (23) zum Greifen und axialen Verschieben der Wicklungspakete (31a, 32a, 33a) vorgesehen ist.

8. Wickelvorrichtung nach einem der vorhergehenden Ansprüche, **dadurch gekennzeichnet, dass** zur Fixierung der Drähte (u, v, w) bei axialer Verschiebung der Wicklungspakete (31a, 32a, 33a) eine radial zum Wickeldorn (10) beabstandete Leiteinrichtung (15, 16) vorgesehen ist.

9. Wickelvorrichtung nach Anspruch 8, **dadurch gekennzeichnet, dass** eine Fangeinrichtung (15a-c, 16a-c) zur Sicherung der zu den Wicklungspaketen (31a, 32a, 33a) führenden Drähte (u, v, w) bei deren axialer Verschiebung vorgesehen ist.

10. Wickelvorrichtung nach Anspruch 8 oder 9, **dadurch gekennzeichnet, dass** die Leiteinrichtung (15, 16) und die Drahtzuführeinheit (18) so in Wirkverbindung bringbar sind, dass bei parallel geführten Drähten (u, v, w) wenigstens zwei äußere Drähte (u, w) vertauschbar sind und ein innerer Draht (v) seine Position beibehält.

11. Wickelvorrichtung nach einem der Ansprüche 8 bis 10, **dadurch gekennzeichnet, dass** die Leiteinrichtung (15, 16) und die Vorschubeinrichtung (23) auf einem gemeinsamen Vorschubschlitten (26) angeordnet sind.

12. Wickelvorrichtung nach einem der vorhergehenden Ansprüche, **dadurch gekennzeichnet, dass** der Wickeldorn (10) eine Länge aufweist, die einer kompletten Feldspule (30) sowie, für jeweils einen Pol (N, S), einer voreilenden und einer nacheilenden Einzelwindung entspricht.

13. Fertigungsvorrichtung mit einer Wickelvorrichtung zur Herstellung einer Feldspule (30) für eine elektrische Maschine, insbesondere einer Feldspule (30) mit einer Zweischichtschleifenwicklung, wobei die Feldspule aus einer Mehrzahl von elektrisch seriell und/oder parallel geschalteten Wicklungspaketen (31a, 32a, 33a ...31j, 32j, 33j) gebildet ist, **dadurch gekennzeichnet, dass** die Wickelvorrichtung nach einem der Ansprüche 1 bis 12 ausgebildet ist.

14. Fertigungsvorrichtung nach Anspruch 13, **dadurch gekennzeichnet, dass** ein Schränkwerkzeug vorgesehen ist, in das die Wicklungspakete (31a, 32a, 33a ...31j, 32j, 33j) in der auf dem Wickeldorn (10) vorgegebenen Reihenfolge einlegbar und verschränkbar sind.

## Claims

1. Winding apparatus for producing a field coil (30) for an electrical machine, in particular a field coil (30) having a two-layered lap winding, wherein the field coil is formed from a plurality of winding stacks (31a, 32a, 33a ... 31j, 32j, 33j) which are connected electrically in series and/or parallel, wherein a winding spindle (10) is provided, it being possible to simultaneously generate at least two winding stacks (31a, 32a, 33a), which are axially spaced apart from one another, on the said winding spindle, **characterized in that** the winding spindle (10) has laminations (11) which can be radially pivoted out, wherein in each case one winding stack (31a, 32a, 33a) can be inserted into a slot (12) between two laminations (11).

2. Winding apparatus according to Claim 1, **characterized in that** a wire supply unit (18) is provided such that wires (u, v, w) which are supplied to the winding spindle (10) can be pivoted about at least two axes (y, z).

3. Winding apparatus according to Claim 2, **characterized in that** the wire supply unit (18) can be displaced perpendicular to a longitudinal axis (x) of the winding spindle (10).

4. Winding apparatus according to Claim 3, **characterized in that** the wire supply unit (18) and the winding spindle (10) are arranged with a rigid axial association.

5. Winding apparatus according to one of the preceding claims, **characterized in that** a fixing device (13) for fixing the wires (u, v, w) is arranged on the winding spindle (10) so as to move with the winding spindle (10).

6. Winding apparatus according to one of the preceding claims, **characterized in that** the wound winding stacks (31a, 32a, 33a) can be axially displaced in order to wind further winding stacks (31b, 32b, 33b).

7. Winding apparatus according to Claim 6, **characterized in that** a feed device (23) for grasping and axially displacing the winding stacks (31a, 32a, 33a) is provided.

8. Winding apparatus according to one of the preceding claims, **characterized in that** a guide device (15, 16) which is radially spaced apart from the winding spindle (10) is provided for fixing the wires (u, v, w) when the winding stacks (31a, 32a, 33a) are axially displaced.

9. Winding apparatus according to Claim 8, **characterized in that** a capturing device (15a-c, 16a-c) for securing the wires (u, v, w), which lead to the winding stacks (31a, 32a, 33a), when they are axially displaced is provided.

10. Winding apparatus according to Claim 8 or 9, **characterized in that** the guide device (15, 16) and the wire supply unit (18) can be operatively connected such that, when wires (u, v, w) are guided in parallel, at least two external wires (u, w) can be interchanged and an inner wire (v) retains its position.

11. Winding apparatus according to one of Claims 8 to 10, **characterized in that** the guide device (15, 16) and the feed device (23) are arranged on a common feed carriage (26).

12. Winding apparatus according to one of the preceding claims, **characterized in that** the winding spindle (10) has a length which corresponds to a complete field coil (30) and also, for in each case one pole (N, S), a leading and a trailing individual turn.

13. Manufacturing apparatus having a winding apparatus for producing a field coil (30) for an electrical machine, in particular a field coil (30) having a two-layered lap winding, wherein the field coil is formed from a plurality of winding stacks (31a, 32a, 33a ... 31j, 32j, 33j) which are connected electrically in series and/or parallel, **characterized in that** the winding apparatus is designed according to one of Claims 1 to 12.

14. Manufacturing apparatus according to Claim 13, **characterized in that** a setting tool is provided, it being possible for the winding stacks (31a, 32a, 33a ... 31j, 32j, 33j) to be inserted into the said setting tool in the order prespecified on the winding spindle (10), and interlaced.

## Revendications

1. Dispositif de bobinage pour la production d'une bobine de champ (30) pour une machine électrique, en particulier d'une bobine de champ (30) comprenant un enroulement imbriqué à deux couches, la bobine de champ étant formée à partir d'une pluralité de paquets d'enroulements (31a, 32a, 33a ... 31j, 32j, 33j) branchés électriquement en série et/ou en parallèle, un mandrin d'enroulement (10) étant prévu, sur lequel au moins deux paquets d'enroulements (31a, 32a, 33a) espacés axialement les uns des autres peuvent être produits simultanément, **caractérisé en ce que** le mandrin d'enroulement (10) comprend des lamelles (11) pouvant être pivotées radialement, un paquet d'enroulements (31a, 32a, 33a) respectif pouvant être inséré dans une rainure (12) entre deux lamelles (11).

2. Dispositif de bobinage selon la revendication 1, **caractérisé en ce qu'**une unité d'amenée de fil (18) est prévue de telle sorte que des fils (u, v, w) amenés jusqu'au mandrin d'enroulement (10) puissent être pivotés autour d'au moins deux axes (y, z).

3. Dispositif de bobinage selon la revendication 2, **caractérisé en ce que** l'unité d'amenée de fil (18) peut être déplacée perpendiculairement à un axe longitudinal (x) du mandrin d'enroulement (10).

4. Dispositif de bobinage selon la revendication 3, **caractérisé en ce que** l'unité d'amenée de fil (18) et le mandrin d'enroulement (10) sont disposés suivant une correspondance axiale fixe.

5. Dispositif de bobinage selon l'une quelconque des revendications précédentes, **caractérisé en ce qu'**un dispositif de fixation (13) pour la fixation des fils (u, v, w) sur le mandrin d'enroulement (10) est disposé de manière à pouvoir tourner avec le mandrin d'enroulement (10).

6. Dispositif de bobinage selon l'une quelconque des revendications précédentes, **caractérisé en ce que**, pour enrouler d'autres paquets d'enroulements (31b, 32b, 33b), les paquets d'enroulements enroulés (31a, 32a, 33a) peuvent être déplacés axialement.

7. Dispositif de bobinage selon la revendication 6, **caractérisé en ce qu'**un dispositif d'avancement (23) est prévu pour saisir et déplacer axialement les paquets d'enroulements (31a, 32a, 33a).

8. Dispositif de bobinage selon l'une quelconque des revendications précédentes, **caractérisé en ce que**, pour la fixation des fils (u, v, w) lors d'un déplacement axial des paquets d'enroulements (31a, 32a, 33a), un dispositif de guidage (15, 16) espacé radialement par rapport au mandrin d'enroulement (10) est prévu.

9. Dispositif de bobinage selon la revendication 8, **caractérisé en ce qu'**il est prévu un dispositif de capture (15a-c, 16a-c) pour le blocage des fils (u, v, w) menant aux paquets d'enroulements (31a, 32a, 33a) lors de leur déplacement axial.

10. Dispositif de bobinage selon la revendication 8 ou 9, **caractérisé en ce que** le dispositif de guidage (15, 16) et l'unité d'amenée de fil (18) peuvent être amenés en liaison fonctionnelle de telle sorte que, lorsque les fils (u, v, w) sont guidés en parallèle, au moins deux fils extérieurs (u, w) puissent être permutés et un fil intérieur (v) conserve sa position.

11. Dispositif de bobinage selon l'une quelconque des revendications 8 à 10, **caractérisé en ce que** le dispositif de guidage (15, 16) et le dispositif d'avancement (23) sont disposés sur un chariot d'avancement (26) commun.

12. Dispositif de bobinage selon l'une quelconque des revendications précédentes, **caractérisé en ce que** le mandrin d'enroulement (10) présente une longueur qui correspond à une bobine de champ (30) complète et qui, pour un pôle (N, S) respectif, correspond à un enroulement individuel avant et à un enroulement individuel arrière.

13. Dispositif de fabrication comprenant un dispositif de bobinage pour la production d'une bobine de champ (30) pour une machine électrique, en particulier d'une bobine de champ (30) comprenant un enroulement imbriqué à deux couches, la bobine de champ étant formée à partir d'une pluralité de paquets d'enroulements (31a, 32a, 33a ... 31j, 32j, 33j) branchés électriquement en série et/ou en parallèle, **caractérisé en ce que** le dispositif de bobinage est réalisé selon l'une quelconque des revendications 1 à 12.

14. Dispositif de fabrication selon la revendication 13, **caractérisé en ce qu'**un outil d'entrelacement est prévu, dans lequel les paquets d'enroulements (31a, 32a, 33a ... 31j, 32j, 33j) peuvent être introduits et entrelacés suivant la séquence prédéfinie sur le mandrin d'enroulement (10).
